# EUROPÄISCHE PATENTSCHRIFT

(11) **EP 1 194 281 B1**
(45) Veröffentlichungstag und Bekanntmachung des Hinweises auf die Patenterteilung: **05.02.2003**
(21) Anmeldenummer: 00953151.8
(22) Anmeldetag: 03.08.2000
(51) Int. Cl.: B29C 67/00, B29C 37/00, B23Q 7/00, B23K 37/00

(54) **VORRICHTUNG UND VERFAHREN ZUR GENERATIVEN HERSTELLUNG EINES DREIDIMENSIONALEN OBJEKTES**
DEVICE AND METHOD FOR GENERATIVE PRODUCTION OF A THREE-DIMENSIONAL OBJECT
DISPOSITIF ET PROCEDE POUR LA PRODUCTION GENERATIVE D'UN OBJET TRIDIMENSIONNEL

(30) Priorität: 20.08.1999 DE 19939616
(43) Veröffentlichungstag der Anmeldung: 10.04.2002
(73) Patentinhaber: EOS GmbH ELECTRO OPTICAL SYSTEMS, 82152 Planegg (DE)
(72) Erfinder: PERRET, Hans, D-80333 München (DE); WEIDINGER, Jochen, D-81476 München (DE); TÜRCK, Harald, D-80689 München (DE)
(74) Vertreter: Prüfer, Lutz H., Dipl.-Phys.
(86) Internationale Anmeldenummer: EP0007545
(87) Internationale Veröffentlichungsnummer: WO01014126

(56) Entgegenhaltungen:
- EP-A- 0 403 146
- EP-A- 0 422 422
- EP-A- 0 500 225
- JP-A- 6 315 986
- JP-A- 10 175 086
- US-A- 5 569 431
- PATENT ABSTRACTS OF JAPAN vol. 1995, no. 08, 29. September 1995 (1995-09-29) & JP 07 125081 A (OLYMPUS OPTICAL CO LTD), 16. Mai 1995 (1995-05-16)

## Beschreibung

Die vorliegende Erfindung betrifft eine Vorrichtung und ein Verfahren zur generativen Herstellung eines dreidimensionalen Objektes, gemäß dem Oberbegriff des Patentanspruchs 1 bzw. gemäß dem Oberbegriff des Patentanspruchs 18.

Eine Vorrichtung zur generativen Herstellung eines dreidimensionalen Objektes durch selektives Lasersintern ist beispielsweise aus der EP 0 734 842 A bekannt. Dort wird eine erste Schicht eines pulverförmigen Materiales auf einer mit einem absenkbaren Träger lösbar verbundenen Unterlage aufgebracht und an den dem Objekt entsprechenden Stellen bestrahlt, so daß das Material dort zusammensintert. Danach wird der Träger mit der Unterlage abgesenkt und es wird auf diese erste Schicht eine zweite Schicht aufgebracht und wiederum selektiv gesintert, die dabei mit der ersten Schicht verbunden wird. Dadurch wird das Objekt schichtweise gebildet. Nach der Fertigstellung des gebildeten dreidimensionalen Objektes wird dieses zusammen mit der Unterlage manuell aus der Vorrichtung entnommen. Dieses Entnehmen begrenzt die Produktivität, da während des Entnehmens kein weiteres Objekt hergestellt werden kann.

Eine gattungsgemäße Vorrichtung und ein dazugehöriges Verfahren zur generativen Herstellung eines dreidimensionalen Objektes ist darüber hinaus aus der EP 0 500 225 A bekannt. Darin ist eine Vorrichtung und ein dazugehöriges Verfahren zum Herstellen eines dreidimensionalen Objektes in Schichten offenbart, wonach die Aushärtung des Grundmaterials durch Aufsprühen eines zweiten Materials erzielt wird, welches nachfolgend an der aufzubauenden Schicht des Objektes wieder abgetragen wird, so daß bei Iteration des Verfahrens das zu bildende Objekt von dem aufgesprühten Material umgeben ist. Eine Vorrichtung zum automatisierten Ein- und Ausgeben einer Arbeitsplatte ist ebenfalls aus diesem Dokument bekannt.

Aus der JP-06-315-986 A ist eine Vorrichtung bekannt, in der ein dreidimensionales Objekt hergestellt wird. Dabei wird eine Trägervorrichtung über eine Schiene relativ zu einer Bearbeitungseinrichtung bewegt. Die Trägervorrichtung wird darüber hinaus in einen Behälter eingetaucht, der mit einem flüssigen Medium gefüllt ist.

Die EP 0 403 146 A betrifft eine Stereolithographievorrichtung, bei der eine Plattform über Führungsschienen von einer ersten in eine zweite Kammer transportiert wird.

Aufgabe der Erfindung ist es, eine verbesserte Vorrichtung zur generativen Herstellung eines dreidimensionalen Objektes, mit der die Produktivität erhöht werden kann, und ein verbessertes Verfahren zur generativen Herstellung eines dreidimensionalen Objektes, mit dem die Produktivität erhöht werden kann, vorzusehen.

Die Aufgabe wird durch die Vorrichtung nach Anspruch 1 oder das Verfahren nach Anspruch 18 gelöst.

Weiterbildung der Erfindung sind in den Unteransprüchen angegeben.

Weitere Merkmale und Zweckmäßigkeiten der Erfindung ergeben sich aus der Beschreibung von Ausführungsformen anhand der Figuren. Von den Figuren zeigen:
- Fig. 1: eine schematische Schnittansicht einer Vorrichtung zum Herstellen eines dreidimensionalen Objektes,
- Fig. 2: eine perspektivische Darstellung der Vorrichtung zum Herstellen eines dreidimensionalen Objektes,
- Fig. 3: eine Schnittansicht eines Teils der Vorrichtung zum Herstellen eines dreidimensionalen Objektes von Fig. 2, bei der der Baurahmen an der Halterung angekoppelt ist,
- Fig. 4: die Schnittansicht gemäß Fig. 3, bei der der Baurahmen von der Halterung abgekoppelt ist,
- Fig. 5: die Schnittansicht gemäß Fig. 3 ohne eingesetzten Baurahmen und
- Fig. 6: eine vergrößerte Teilansicht des Bereiches A von Fig. 3.

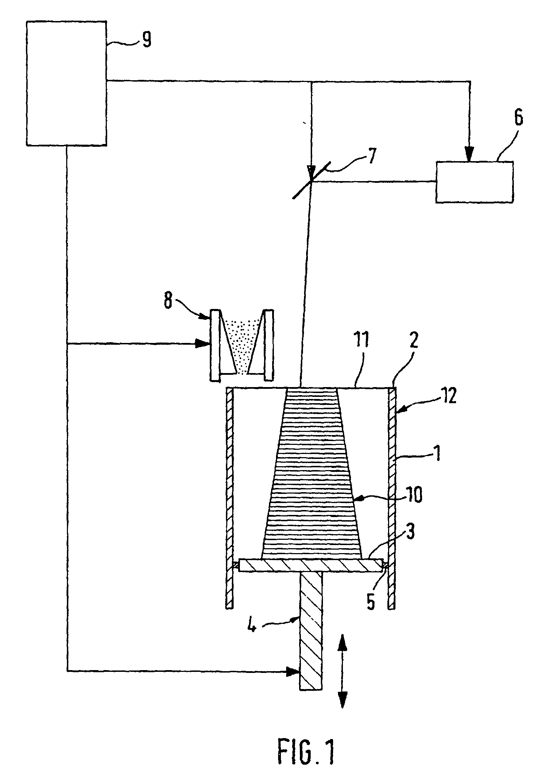

Wie am besten aus Fig. 1 ersichtlich ist, weist die Vorrichtung zum Herstellen eines dreidimensionalen Objektes einen nach oben und unten offenen Baurahmen 1 mit kreisförmigem, quadratischem oder rechteckigem Querschnitt mit einem oberen Rand 2 auf. In dem Baurahmen ist eine Bauplattform 3 vorgesehen, die mit einem Vertikalantrieb 4 verbunden ist. Die Bauplattform 3 kann über den Vertikalantrieb 4 in vertikale Richtung auf- und abbewegt werden. An dem äußeren Rand der Bauplattform 3 ist eine Dichtung 5 vorgesehen, die den Spalt zwischen der Bauplattform 3 und dem Baurahmen 1 abdichtet. Oberhalb des oberen Randes 2 ist eine Verfestigungseinrichtung in Form eines Lasers 6 und eines Ablenkspiegels 7 angeordnet. Weiterhin ist noch eine Aufbringeinrichtung 8 zum Aufbringen des auf die Bauplattform 3 aufzubringenden Materiales vorgesehen. Der Laser 6, der Ablenkspiegel 7, die Aufbringeinrichtung 8 und der vertikalantrieb 4 werden durch eine Steuerung 9 gesteuert. Bei der Darstellung von Fig. 1 ist ein gebildetes Objekt 10 eingezeichnet, daß von nicht verfestigtem Material 11 umgeben ist. Der Baurahmen 1 und die Bauplattform 3 bilden zusammen ein Wechselbehälter 12.

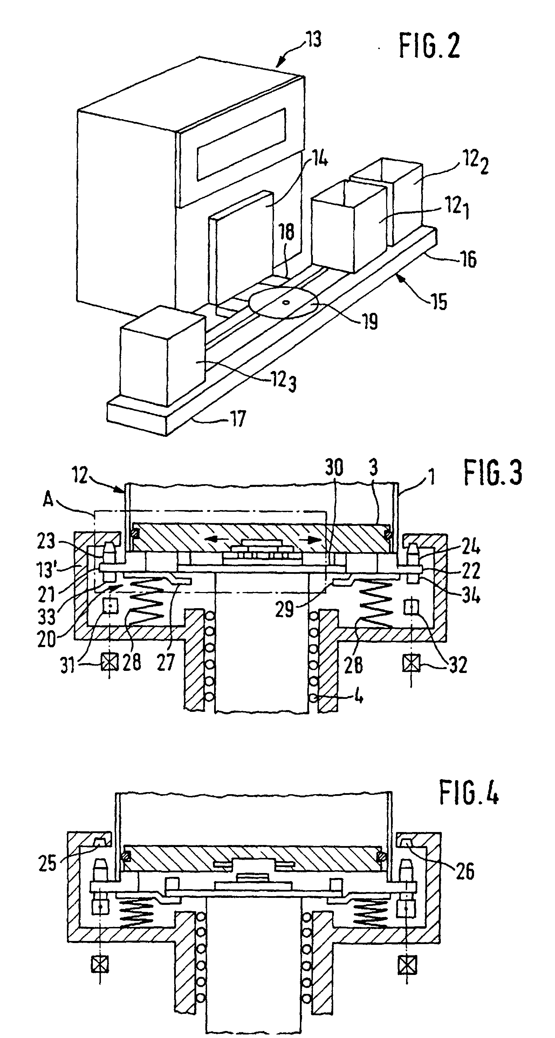

Die in Fig. 1 gezeigte Vorrichtung ist in einem Gehäuse 13 angeordnet, das in Fig. 2 gezeigt ist. Dieses Gehäuses 13 weist an seiner vorderen Seite eine automatisch zu öffnende und zu schließende Tür 14 auf. In dem Gehäuse 13 ist ein Baubereich vorgesehen, in dem das Objekt hergestellt wird. In diesem Baubereich ist der Wechselbehälter 12 während der Herstellung angeordnet. Weiterhin ist ein mit dem Gehäuse 13 verbundenes Schienensystem 15 mit einem nicht gezeigten Transportantrieb, z.B. ein Kettentrieb, vorgesehen. Mit diesem Schienensystem 15 wird ein leerer Wechselbehälter 12₁, 12₂ in die Vorrichtung zum Herstellen eines dreidimensionalen Objektes hinein transportiert und ein gefüllter Wechselbehälter 12₃, also ein Wechselbehälter, in dem ein gebildetes Objekt enthalten ist, aus der Vorrichtung heraus transportiert. Dazu weist das Schienensystem 15 einen Zuführabschnitt 16, einen Abführabschnitt 17 und einen mit der Vorrichtung verbundenen Verbindungsabschnitt 18 auf. Der Zuführabschnitt 16, der Abführabschnitt 17 und der Verbindungsabschnitt 18 sind über eine Weiche 19 miteinander verbunden. Der Zuführabschnitt 16 und der Abführabschnitt 17 sind mit einem nicht gezeigten Speicher verbunden, in dem die leeren Wechselbehälter und die gefüllten Wechselbehälter aufbewahrt werden.

Die Vorrichtung enthält neben dem Schienensystem 15 eine Kopplungseinrichtung 20 zum Ankoppeln des Wechselbehälters 12 an eine Halterung 13' des Gehäuses 13 und zum Abkoppeln des Wechselbehälters 12 von der Halterung 13'. Fig. 3 zeigt eine Schnittansicht durch den entsprechenden Teil der Halterung 13' des Gehäuses 13, wobei ein Zustand gezeigt wird, in dem der Wechselbehälter 12 an der Halterung 13' angekoppelt ist. Wie in Fig. 3 gezeigt ist, weist der Baurahmen 1 an seinem unteren Ende auf beiden Seiten jeweils einen nach außen vorstehenden Vorsprung 21, 22 auf. Auf jedem dieser Vorsprünge 21, 22 ist jeweils ein justierbares Positionierelement 23, 24 vorgesehen. Die Positionierelemente 23, 24 weisen jeweils auch die Wirkung eines Anschlages auf. Die Länge der justierbaren Positionierelemente 23, 24 kann in der Richtung der Bewegung des Vertikalantriebs 4 eingestellt werden. Die Halterung 13' weist Widerlagerflächen 25, 26 auf, mit denen die justierbaren Positionierelemente 23, 24 im angekoppelten Zustand des Wechselbehälters 12 in Kontakt stehen. Wie am besten in Fig. 4 ersichtlich ist, können die Widerlagerflächen 25, 26 und die justierbaren Positionierelemente 23, 24 so ausgebildet sein, daß sie im angekoppelten Zustand des Wechselbehälters 12 formschlüssig ineinandergreifen. Wie aus Fig. 3 ersichtlich ist, liegt der Wechselbehälter 12 mit seinem unteren Ende auf einer Platte 27 auf, die durch Federn mit der Halterung 13' verbunden und so vorgespannt ist, daß der Wechselbehälter 12 in Fig. 3 gesehen so nach oben gedrückt wird, daß die justierbaren Positionierelemente 23, 24 in Eingriff mit den Widerlagerflächen 25, 26 stehen. Die Platte 27 ist so ausgebildet, daß sie in der Mitte eine Ausnehmung 29 aufweist, durch die der Vertikalantrieb 4 hindurchgeführt ist. An dem Vertikalantrieb 4 ist ein Mitnehmer 30 befestigt, der, wie in Fig. 3 gezeigt ist, oberhalb der Platte 27 angeordnet ist. Der Mitnehmer 30 ist so ausgebildet, daß er größer als die Ausnehmung 29 der Platte 27 ist. Daher kommt der Mitnehmer 30, wie in Fig. 4 gezeigt ist, bei einer Bewegung des Vertikalantriebs 4 nach unten in Kontakt mit der Platte 27 und nimmt sie bei der Bewegung nach unten gegen die Federkraft mit.

Weiterhin sind, wie in Fig. 3 gezeigt ist, zwei umlaufende Ketten 31, 32 vorgesehen, die unterhalb der Platte 27 angeordnet sind. An der Unterseite der Vorsprünge 21, 22 des Baurahmens 1 ist jeweils ein Kettenkopplungselement 33, 34 befestigt. Die Ketten 31, 32 und die Kettenkopplungselemente 33, 34 sind so zueinander angeordnet, daß bei.einer Bewegung des Baurahmens 1 nach unten die Kettenkopplungselemente 33, 34 in Eingriff mit den Ketten 31, 32 kommen, wie in Fig. 4 gezeigt ist.

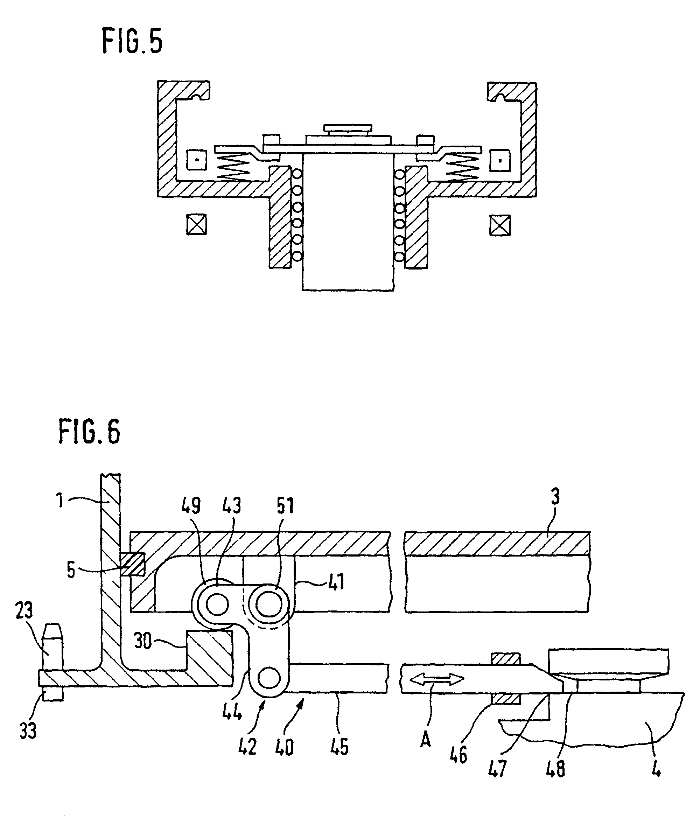

Weiterhin weist die_Vorrichtung noch eine Verriegelungseinrichtung 40 auf, wie in Fig. 6 gezeigt ist. Fig. 6 ist eine Ausschnittsvergrößerung des Bereiches A von Fig. 3, wobei die Platte 27, die Federn 28 und der Mitnehmer 30 nicht eingezeichnet wurden. An der Unterseite der Bauplattform 3 ist ein Verbindungsstück 41 befestigt, an dem ein Kipphebel mit einem ersten Schenkel 43 und einem sich dazu senkrecht erstreckenden zweiten Schenkel 44 über den Verbindungsbereich der beiden Schenkel 43, 44 am Kreuzungspunkt der Längsachsen der Schenkel drehbar gelagert ist. Das freie Ende des zweiten Schenkels 44 ist drehbar mit einer Verriegelungsstange 45 verbunden, die so in einer Führung 46 geführt ist, daß die Verriegelungsstange 45 im eingesetzten Zustand des Wechselbehälters 12 nur senkrecht zu der Bewegungsrichtung des Vertikalantriebs 4 hin- und herbewegt werden kann, wie dies durch den Doppelpfeil A in Fig. 6 angedeutet ist. Die Führung 46 ist über ein nicht gezeigtes Verbindungselement mit der Bauplattform 3 verbunden. Das von dem freien Ende des zweiten Schenkels 44 wegweisende vordere Ende 47 der Verriegelungsstange 45 ist sich verjüngend ausgebildet. An dem Vertikalantrieb 4 ist ein dem vorderen Ende 47 entsprechend geformte ringförmige Ausnehmung 48 vorgesehen. An dem freien Ende des ersten Schenkels 43 des Kipphebels 42 ist eine drehbar gelagerte Rolle 49 vorgesehen. Die Rolle 49 steht bei der in Fig. 6 gezeigten Stellung der Bauplattform 3 in Kontakt mit einem Entriegelungsvorsprung 50 des Baurahmens 1. Zwischen dem Kipphebel 42 und dem Verbindungsstück 41 ist eine Torsionsfeder 41 angeordnet, die den Kipphebel so vorspannt, daß die Verriegelungsstange 45 zu dem Vertikalantrieb 4 hinbewegt wird. Der Kipphebel 42, der Entriegelungsvorsprung 50 und die Verriegelungsstange 45 sind so angeordnet, daß bei einer weiteren Bewegung des Vertikalantriebs 4 nach unten bei dem in Fig. 6 gezeigten Zustand der Entriegelungsvorsprung 50 den ersten Schenkel 43 des Kipphebels 42 über die Rolle 49 nach oben gegen die Federkraft der Torsionsfeder 51 drückt, so daß die Verriegelungsstange 45 in Fig. 6 nach links bewegt wird, wodurch der Eingriff des vorderen Endes 47 mit der Ausnehmung 48 gelöst wird.

Es wird nun der Betrieb der Vorrichtung beschrieben. Es wird dabei angenommen, daß in der Vorrichtung bzw. in dem Baubereich bereits eine Bauplattform 3 und ein Baurahmen 1 enthalten ist. Es wird zunächst die Bauplattform 3 so in dem Baurahmen 1 positioniert, daß sie um eine vorbestimmte Schichtdicke unterhalb des oberen Randes 2 des Baurahmens 1 positioniert ist. Dann wird durch die Aufbringeinrichtung 8 eine Schicht des zu verfestigenden Materials auf die Bauplattform 3 aufgebracht und anschließend mit der Verfestigungseinrichtung an den gewünschten Stellen selektiv verfestigt. Danach wird die Bauplattform um eine gewünschte Schichtdicke abgesenkt und eine weitere Materialschicht wird aufgebracht. Diese wird wiederum selektiv verfestigt und dabei mit der unteren Materialschicht verbunden. Dies wird so lange fortgesetzt, bis das herzustellende Objekt fertiggestellt ist. Es können auch in einem solchen beschriebenen Bauvorgang mehrere Objekte nebeneinander und/oder übereinander auf der Bauplattform 3 hergestellt werden. Dann wird die Bauplattform 3 in die in Fig. 3 gezeigte Position verfahren. Die Steuerung 9 steuert den Vertikalantrieb 4 weiter derart an, daß er von der in Fig. 3 gezeigten Position weiter nach unten fährt. Dadurch kommt der Mitnehmer 30 in Kontakt mit der Platte 27 und nimmt sie bei der Bewegung des Vertikalantriebs nach unten gegen die Federkraft der Federn 28 mit. Dadurch bewegt sich auch der Wechselbehälter 12, der auf der Platte 27 sitzt, nach unten. Somit wird der Eingriff zwischen den justierbaren Positionierelementen 23, 24 und den Widerlagerflächen 25, 26 gelöst. Diese Bewegung des Vertikalantriebs 4 nach unten wird so lange fortgesetzt, bis die Kettenkopplungselemente 33, 34 in Eingriff mit den Ketten 31, 32 gelangen, wie in Fig. 4 gezeigt ist. Gleichzeitig wird durch diese Bewegung des Vertikalantriebs 4 nach unten der erste Schenkel 43 des Kipphebels 42 gegen den in Fig. 6 gezeigten Entriegelungsvorsprung 50 des Baurahmens 1 gedrückt, wodurch der erste Schenkel 43 zur Bauplattform hin bewegt wird. Dadurch wird die Verriegelungsstange 45 in Fig. 6 gesehen nach links bewegt und der Eingriff zwischen dem vorderen Ende 47 der Verriegelungsstange 45 und der Ausnehmung 48 gelöst. Damit ist der Baurahmen 1 von der Halterung 13' abgekoppelt und die Bauplattform 3 von dem Vertikalantrieb 4 getrennt. Nun wird durch die Steuerung 9 die automatische Tür 14 (Fig. 2) geöffnet und die Ketten 31, 32 angesteuert, wodurch der gefüllte Wechselbehälter 12 aus der Vorrichtung heraustransportiert wird (Fig. 5). Vorher wurde die Weiche 19 so gestellt, daß der gefüllte Wechselbehälter 12 zu dem Abführabschnitt 17 transportiert wird. Von da wird der gefüllte Wechselbehälter 12 in das Lager transportiert. Danach wird die Weiche 19 so umgestellt, daß der Zuführabschnitt 16 mit dem Verbindungsabschnitt 18 verbunden ist. Über diese Verbindung wird nun ein leerer Wechselbehälter 12₁ in die Maschine hineintransportiert. Der Vertikalantrieb 4 wird nun durch die Steuerung 9 nach oben bewegt. Dadurch wird nun in umgekehrter Reihenfolge der leere Wechselbehälter 12₁ an die Halterung 13' des Gehäuses 13 angekoppelt, wie in Fig. 3 gezeigt ist, und die Bauplattform 3 mit dem Vertikalantrieb 4 verriegelt, wie in Fig. 6 gezeigt ist. Die Steuerung 9 führt nun alle zum Starten eines neuen Bauvorgangs notwendigen Aktivitäten durch. Dies umfaßt beispielsweise das Bereitstellen der Geometriedaten für das herzustellende Objekt und die Überprüfung des Zustandes der Vorrichtung. Dieses Überprüfen umfaßt beispielsweise die Prüfung, ob noch genügend Material in der Vorrichtung ist, und ein Überprüfen des Verfestigungseinrichtung. Aufgrund des Ergebnisses dieser Überprüfung wird durch die Steuerung 9 beispielsweise ein Nachführen von Material aus einem externen Vorratsbehälter, ein Reinigen der Verfestigungseinrichtung und/oder ein Durchführen einer Kalibrierung der Verfestigungseinrichtung gesteuert. Danach startet die Steuerung 9 einen neuen Bauvorgang und auf der Bauplattform 3 des leeren Wechselbehälters 12₁ wird nun ein neues Objekt gebildet. Die beschriebenen Schritte werden alle automatisch mittels der Steuerung 9 durchgeführt.

Ein Vorteil dieser Ausführungsform besteht darin, daß das An- und Abkoppeln des Baurahmens 1 an die Halterung 13' des Gehäuses 13 durch die Bewegung des Vertikalantriebs 4 durchgeführt wird. Dadurch läßt sich ein zusätzlicher Aktuator einsparen. Weiterhin wird auch die Betätigungskraft für die Verriegelung von Bauplattform 3 und Vertikalantrieb 4 aus der Bewegung des Vertikalantriebs 4 abgeleitet. Eine solche Lösung hat angesichts der bei Verwendung von bestimmten Materialien, wie z.B. Kunststoffpulver, auftretenden erhöhten Temperaturen in diesem Bereich des Baurahmens, typischerweise zwischen 100 und 150°C, den Vorteil, daß kein Aktuator diesen Temperaturen ausgesetzt wird. Außerdem entfallen Sensoren oder Schalter, was die Einfachheit und damit die Zuverlässigkeit fördert.

In einer alternativen Ausführungsform ist es möglich, die zum Ankoppeln des Baurahmens 1 an die Halterung 13' des Gehäuses 13 und zum Verriegeln der Bauplattform 3 an dem Vertikalantrieb 4 notwendige Hubbewegung durch einen zusätzlichen Aktuator zu erzeugen. Es können auch für jede dieser Bewegungen jeweils ein zusätzlicher Aktuator vorgesehen werden.

In einer Weiterbildung der Erfindung weist das Gehäuse 13 der Vorrichtung angrenzend an die Vorderseite an einer der Seitenwände oder an der Rückseite eine weitere Tür auf. Das Schienensystem ist dann mit dieser Tür verbunden und entweder seitlich oder hinter der Maschine vorgesehen. Dies hat den Vorteil, daß die Maschine manuell durch die frontseitige Tür 14 und automatisch über das Schienensystem über die seitliche bzw. rückwärtige Tür beladen werden kann. Ebenfalls in einer Weiterbildung ist die Steuerung so ausgebildet, daß nach dem Entnehmen des hergestellten Objekts automatisch eine Systemwartung der Vorrichtung, die beispielsweise die Klingenreinigung der Aufbringeinrichtung, eine Reinigung der Optik des Lasersystems und/oder eine Nachkalibrierung umfaßt, durchgeführt.

Es wurde eine Vorrichtung und ein Verfahren beschrieben, bei denen das Objekt schichtweise mittels gesteuerter Einwirkung eines Laserstrahles an dem Querschnitt des Objektes entsprechenden Stellen in jeder Schicht hergestellt wird. Solche Vorrichtungen und Verfahren sind beispielsweise eine Lasersintervorrichtung oder eine Stereolithographievorrichtung und die dazugehörigen Verfahren. Die Erfindung ist aber nicht darauf beschränkt. Es kann jede Vorrichtung und jedes Verfahren vorgesehen sein, bei denen das herzustellende Objekt generativ gebildet wird, d.h. das Objekt wird durch gesteuertes Hinzufügen von Aufbaumaterial gebildet. Beispielsweise kann auch eine Vorrichtung vorgesehen sein, bei der ein Objekt durch schichtweises Verfestigen eines pulverförmigen Materials mittels eines Klebestoffs hergestellt wird.

Ein entscheidender Punkt der vorliegenden Erfindung besteht darin, daß die Steuerung 9 das Herstellen eines oder mehrerer Objekte, das Entladen dieses bzw. dieser Objekte aus dem Baubereich der Vorrichtung, das Durchführen der Aktivitäten für einen weiteren Bauvorgang, das Bilden eines oder mehrerer weiterer Objekte, das Entladen des bzw. dieser Objekte, usw. so steuert, daß dies vollautomatisch durchgeführt wird. Dadurch wird eine vollautomatische Abfolge von mehreren Bauvorgängen durch generative Herstellungsverfahren ermöglicht. Weiterhin sind keine manuellen Tätigkeiten erforderlich und die Produktivität der Vorrichtung bzw. des Verfahrens wird gesteigert.

Bei den beschriebenen Ausführungsformen wird das Beladen des Baubereichs der Vorrichtung mit einem leeren Wechselbehälter 12₁, 12₂, das Bilden des Objektes und das Entladen von dem Wechselbehälter 12₃ mit dem darin gebildeten Objekt aus dem Baubereich so gesteuert, daß dies automatisch ausgeführt wird. Es ist jedoch auch möglich, daß nur die Bauplattform 3 automatisch ausgewechselt wird. Dies ist besonders bei solchen Vorrichtungen zur generativen oder schichtweisen Herstellung eines dreidimensionalen Objektes der Fall, die einen mit der Maschine fest verbundenen Baurahmen oder die keinen Baurahmen aufweisen. Eine Vorrichtung ohne Baurahmen ist beispielsweise eine Vorrichtung für das FDM-Verfahren (FDM = Fused Deposition Modelling), das beispielsweise in der US 5 121 329 beschrieben ist.

Weiterhin ist es bei einer weiteren Ausführungsform auch möglich, daß nur das hergestellte Objekt aus dem Baubereich der Vorrichtung entladen wird und daß danach ein weiteres Objekt hergestellt wird, das wiederum entladen wird.

Weiterhin können die hergestellten Objekte bei der Entnahme aus dem Baubereich in einen anderen Bereich der Vorrichtung gebracht werden und später manuell oder automatisch aus der Vorrichtung entnommen werden.

## Patentansprüche

1. Vorrichtung zur generativen Herstellung eines dreidimensionalen Objektes, mit
einem Baubereich, in dem das Objekt hergestellt wird, und
einer Steuerung (9), die derart ausgebildet ist, daß sie zur Steuerung der Durchführung folgender Schritte in der Lage ist:
a) Herstellen eines Objektes,
b) Entnehmen des hergestellten Objektes aus dem Baubereich und
c) Wiederholen der Schritte a) und b), **gekennzeichnet durch** eine Transportiereinrichtung (18, 31, 32) zum Ent- und Beladen des Baubereichs mit einer Bauplattform (3) zum Tragen des herzustellenden Objektes, **dadurch gekennzeichnet , daß** ein die Bauplattform (3) umgebender Baurahmen (1) vorgesehen ist, der zusammen mit der Bauplattform (3) in bzw. aus dem Baubereich beladen und entladen wird.

2. Vorrichtung nach Anspruch 1, wobei die Steuerung derart ausgebildet ist, daß sie im Schritt a) zur Steuerung einer Beladung des Baubereichs mit der Bauplattform (3) und im Schritt b) zur Steuerung einer Entladung der Bauplattform (3) mit dem hergestellten Objekt aus dem Baubereich in der Lage ist.

3. Vorrichtung nach Anspruch 1 oder 2,
weiter mit einer Zuführeinrichtung (16) zum Zuführen der in die Vorrichtung zu ladenden Bauplattform (3) zu der Transportiereinrichtung (18, 31, 32)
und einer Abführeinrichtung (17) zum Abführen einer aus der Vorrichtung zu entladenden Bauplattform (3) von der Transportiereinrichtung (18, 31, 32).

4. Vorrichtung nach Anspruch 3,
bei dem die Zuführ- und Abführeinrichtung (16, 17) über eine Weiche (19) mit der Transportiereinrichtung (18, 31, 32) verbunden sind.

5. Vorrichtung nach einem der Ansprüche 1 bis 4, weiter mit
einem verfahrbaren Betätigungselement (4) zum Einstellen der Position der Bauplattform (3) in dem Baubereich und
einer verbindungseinrichtung (40) zum Verbinden der Bauplattform (3) mit dem Betätigungselement (4).

6. Vorrichtung nach Anspruch 5, mit
einem Verbindungsstellglied zum Betätigen der Verbindungseinrichtung (40).

7. Vorrichtung nach Anspruch 6, bei der
das Verbindungsstellglied das Betätigungselement (4) ist.

8. Vorrichtung nach einem der Ansprüche 5 bis 7, bei der die Verbindungseinrichtung (40) an der Bauplattform (3) vorgesehen ist.

9. Vorrichtung nach Anspruch 1, weiter mit
einer Halterung (13') und
einer Kopplungseinrichtung (20) zum Ankoppeln des Baurahmens (1) an der Halterung (13') beim Beladen und zum Abkoppeln des Baurahmens (1) von der Halterung (13') beim Entladen.

10. Vorrichtung nach Anspruch 9,
bei dem die Kopplungseinrichtung (20) ein Kopplungselement (27) aufweist, das den Baurahmen (1) im angekoppelten Zustand in Verbindung mit der Haiterung (13') bringt.

11. Vorrichtung nach Anspruch 9 oder 10, weiter mit
einem Kopplungsstellglied zum Ankoppeln und/oder Abkoppeln.

12. Vorrichtung nach Anspruch 11, bei der
das Kopplungsstellglied das Betätigungselement (4) zum Einstellen der Position der Bauplattform (3) in dem Baubereich ist.

13. Vorrichtung nach Anspruch 11 oder 12, bei dem
das Kopplungselement (27) vorgespannt ist und
die Kopplungseinrichtung (20) einen mit dem Kopplungsstellglied verbundenen Mitnehmer (30) aufweist, der durch das Kopplungsstellglied so bewegt werden kann, daß er das Kopplungselement (27) gegen die Vorspannung bewegt.

14. Vorrichtung nach einem der Ansprüche 9 bis 13,
bei dem die Kopplungseinrichtung ein justierbares Positionierelement (23, 24) aufweist, mit dem die relative Position des Baurahmens (1) zu der Halterung (13') im angekoppelten Zustand einstellbar ist.

15. Vorrichtung nach einem der Ansprüche 1 bis 14, weiter mit
einer Aufbringeinrichtung (8) zum Aufbringen von verfestigbarem Material auf die Bauplattform (3) und
einer Verfestigungseinrichtung (6, 7) zum selektiven Verfestigen des aufgebrachten Materials.

16. Vorrichtung nach einem der Ansprüche 1 bis 15,
wobei die Vorrichtung so ausgebildet ist, daß das Objekt schichtweise herstellbar ist.

17. Vorrichtung nach einem der Ansprüche 1 bis 16, wobei die Steuerung so ausgebildet ist, daß nach dem Entnehmen des hergestellten Objektes automatisch eine Systemwartung der Vorrichtung durchgeführt wird.

18. Verfahren zur generativen Herstellung eines dreidimensionalen Objektes mit einer Vorrichtung mit den Schritten:
a) Herstellen eines Objektes in einem Baubereich der Vorrichtung,
b) Entnehmen des hergestellten Objektes aus dem Baubereich und
c) Wiederholen der Schritte a) und b),
wobei die Schritte a) bis c) automatisch durchgeführt werden, **dadurch gekennzeichnet, daß**
vor jedem Schritt a) der folgende Schritt d) durchgeführt wird:
d) automatisches Beladen des Baubereiches mit einer Bauplattform (3) zum Tragen des herzustellenden Objektes wobei der Baubereich mit der Bauplattform (3) und mit einem die Bauplattform (3) umgebenden Baurahmen (1) automatisch beladen wird.

19. Verfahren nach Anspruch 18, bei dem
im Schritt d) die Bauplattform (3) mit einem verfahrbaren Betätigungselement (4) zum Einstellen der Position der Bauplattform (3) in dem Baubereich verbunden wird.

20. Verfahren nach Anspruch 18, bei dem
im Schritt d) der Baurahmen (1) mit einer Halterung (13') der Vorrichtung verbunden wird.

21. Verfahren nach einem der Ansprüche 18 bis 20, bei dem im Schritt b) die Bauplattform (3) zusammen mit dem darauf hergestellten Objekt und dem Baurahmen (1) entnommen wird.

22. Verfahren nach einem der Ansprüche 18 bis 21, bei dem das Objekt schichtweise hergestellt wird.

23. Verfahren nach einem der Ansprüche 18 bis 22, wobei nach dem Entnehmen des hergestellten Objektes automatisch eine Systemwartung der Vorrichtung durchgeführt wird.

## Claims

1. Device for generative manufacture of a three-dimensional object, with
a construction area, in which the object is manufactured and a control system (9) which is constructed in such a way that it is able to control the execution of the following steps:
a) manufacture of an object,
b) removal of the manufactured object from the construction area, and
c) repeating steps a) and b), **characterised by** a conveying device (18, 31, 32) for unloading and loading the construction area with a construction platform (3) for carrying the object to be manufactured, **characterised in that** a construction frame (1) surrounding the construction platform (3) is provided, which is loaded and unloaded into or from the construction area together with the construction platform (3).

2. Device according to claim 1, wherein the control system is constructed in such a way that it is able to control in step a) loading the construction area with the construction platform (3) and in step b) unloading the construction platform (3) with the manufactured object from the construction area.

3. Device according to claim 1 or 2, further with a feed device (16) for feeding the construction platform (3) to be loaded into the device to the conveying device (18, 31, 32)
and a removal device (17) for removing a construction platform (3) to be unloaded from the device from the conveying device (18, 31, 32).

4. Device according to claim 3, in which the feed and removal devices (16, 17) are connected to the conveying device (18, 31, 32) via switch gear (19).

5. Device according to one of claims 1 to 4, further with a travelling actuating element (4) for setting the position of the construction platform (3) in the construction area and a connecting device (40) for connecting the construction platform (3) to the actuating element (4).

6. Device according to claim 5, with a connection servo for actuating the connecting device (40).

7. Device according to claim 6, in which the connection servo is the actuating element (4).

8. Device according to one of claims 5 to 7, in which the connecting device (40) is provided on the construction platform (3).

9. Device according to claim 1, further with a mounting (13') and a coupling device (20) for coupling the construction frame (1) to the mounting (13') during loading and for uncoupling the construction frame (1) from the mounting (13') during unloading.

10. Device according to claim 9, in which the coupling device (20) has a coupling element (27) which brings the construction frame (1) in the coupled state into connection with the mounting (13').

11. Device according to claim 9 or 10, further with a coupling servo for coupling and/or uncoupling.

12. Device according to claim 11, in which the coupling servo is the actuating element (4) for setting the position of the construction platform (3) in the construction area.

13. Device according to claim 11 or 12, in which the coupling element (27) is biased and the coupling device (20) has a carrier (30) connected to the coupling servo, which can be moved by the coupling servo in such a way that it moves the coupling element (27) against the bias.

14. Device according to one of claims 9 to 13, in which the coupling device has an adjustable positioning element (23, 24), with which the relative position of the construction frame (1) to the mounting (13') in the coupled state can be set.

15. Device according to one of claims 1 to 14, further with an application device (8) for applying hardenable material on to the construction platform (3) and a hardening device (6, 7) for the selective hardening of the applied material.

16. Device according to one of claims 1 to 15, wherein the device is constructed in such a way that the object can be manufactured in layers.

17. Device according to one of claims 1 to 16, wherein the control system is constructed in such a way that after the manufactured object has been removed system maintenance of the device is carried out automatically.

18. Method for generative manufacture of a three-dimensional object with a device with the steps:
a) manufacture of an object in a construction area of the device,
b) removal of the manufactured object from the construction area and
c) repeating steps a) and b),
wherein steps a) to c) are carried out automatically, **characterised in that** before each step a) the following step d) is carried out:
d) automatic loading of the construction area with a construction platform (3) for carrying the object to be constructed, wherein the construction area is automatically loaded with the construction platform (3) and with a construction frame (1) surrounding the construction platform (3).

19. Method according to claim 18, in which in step d) the construction platform (3) is connected to a travelling actuating element (4) for setting the position of the construction platform (3) in the construction area.

20. Method according to claim 18, in which in step d) the construction frame (1) is connected to a mounting (13') of the device.

21. Method according to one of claims 18 to 20, in which in step b) the construction platform (3) is removed together with the object manufactured on it and the contruction frame (1).

22. Method according to one of claims 18 to 21, in which the object is manufactured in layers.

23. Method according to one of claims 18 to 22, wherein after the manufactured object has been removed system maintenance of the device is carried out automatically.

## Revendications

1. Dispositif pour la fabrication générative d'un objet tridimensionnel, avec
une zone de construction, dans laquelle l'objet est fabriqué, et une commande (9), qui est réalisée de telle sorte qu'elle est en mesure d'exécuter les étapes suivantes :
a) fabrication d'un objet,
b) prélèvement de l'objet fabriqué de la zone de construction et
c) répétition des étapes a) et b), **caractérisé par** un dispositif de transport (18, 31, 32) pour le déchargement et le chargement de la zone de construction avec une plate-forme de construction (3) pour le port de l'objet à fabriquer, et en ce qu'il est prévu un cadre de construction (1) entourant la plate-forme de construction (3), qui est chargé et déchargé conjointement avec la plate-forme de construction (3) dans ou hors de la zone de construction.

2. Dispositif selon la revendication 1, la commande étant conçue de telle sorte qu'elle est en mesure dans l'étape a) de contrôler un chargement de la zone de construction avec la plate-forme de construction (3) et dans l'étape b) de contrôler un déchargement de la plate-forme de construction (3) avec l'objet fabriqué hors de la zone de construction.

3. Dispositif selon la revendication 1 ou 2,
également avec un dispositif d'amenée (16) pour l'arrivée de la plate-forme (3) à charger dans le dispositif au système de transport (18, 31, 32)
et un système d'évacuation (17) pour évacuer une plate-forme (3) à décharger du système de transport (18, 31, 32).

4. Dispositif selon la revendication 3,
sur lequel les systèmes d'amenée et d'évacuation (16, 17) sont reliés par une aiguille (19) au système de transport (18, 31, 32).

5. Dispositif selon l'une quelconque des revendications 1 à 4, également avec un élément d'actionnement (4) déplaçable pour le réglage de la position de la plate-forme de construction (3) dans la zone de construction et un système de liaison (40) pour la jonction de la plate-forme de construction (3) avec l'élément de commande (4).

6. Dispositif selon la revendication 5, avec un actionneur de liaison pour l'actionnement du système de liaison (40).

7. Dispositif selon la revendication 6, sur le quel l'actionneur de liaison est l'élément de commande (4).

8. Dispositif selon l'une quelconque des revendications 5 à 7, avec lequel le dispositif de liaison (40) est prévu sur la plate-forme de construction (3).

9. Dispositif selon la revendication 1, également avec une fixation (13') et
un système de couplage (20) pour l'accouplement du cadre de construction (1) sur la fixation (13') lors du chargement et pour le désaccouplement du cadre de construction (1) de la fixation (13') lors du déchargement.

10. Dispositif selon la revendication 9,
avec lequel le système de couplage (20) présente un élément d'accouplement (27), qui amène le cadre de construction (1) dans l'état accouplé en liaison avec la fixation (13').

11. Dispositif selon la revendication 9 ou 10, également avec un actionneur de couplage pour l'accouplement et/ou le désaccouplement.

12. Dispositif selon la revendication 11, dans lequel l'actionneur de couplage est l'élément d'actionnement (4) pour le réglage de la position de la plate-forme (3) dans la zone de construction.

13. Dispositif selon la revendication 11 ou 12, dans lequel l'élément de couplage (27) est prétendu et le système de couplage (20) présente un entraîneur (30) relié à l'actionneur de couplage, qui peut être déplacé par l'actionneur de couplage de telle façon qu'il déplace l'élément de couplage (27) contre la prétention.

14. Dispositif selon l'une quelconque des revendications 9 à 13, avec lequel le système de couplage présente un élément de positionnement (23, 24) réglable, avec lequel la position relative du cadre de construction (1) par rapport à la fixation (13') est réglable dans l'état accouplé.

15. Dispositif selon l'une quelconque des revendications 1 à 14, également avec
un système d'application (8) pour l'application de matériau durcissable sur la plate-forme (3) et un système de durcissement (6, 7) pour le durcissement sélectif du matériau appliqué.

16. Dispositif selon l'une quelconque des revendications 1 à 15, le dispositif étant conçu de telle façon que l'objet peut être fabriqué par couches.

17. Dispositif selon l'une quelconque des revendications 1 à 16, la commande étant conçue de telle façon que, après le prélèvement de l'objet fabriqué, une maintenance du système du dispositif est effectuée automatiquement.

18. Dispositif pour la fabrication générative d'un objet tridimensionnel avec un dispositif avec les étapes suivantes :
a) fabrication d'un objet dans une zone de construction du dispositif,
b) prélèvement de l'objet fabriqué de la zone de construction et
c) répétition des étapes a) et b),
les étapes a) à c) étant effectuées automatiquement,
**caractérisé en ce que**
l'étape suivante d) est effectuée avant chaque étape a):
d) chargement automatiquement de la zone de construction avec une plate-forme (3) pour le port de l'objet à fabriquer, moyennant quoi la zone de construction est automatiquement chargée avec la plate-forme de construction (3) et avec un cadre de construction (1) entourant la plate-forme (3).

19. Procédé selon la revendication 18, avec lequel, lors de l'étape d), la plate-forme (3) est reliée à un élément d'actionnement (4) déplaçable pour le réglage de la position de la plate-forme (3) dans la zone de construction.

20. Procédé selon la revendication 18, dans lequel, lors de l'étape d), le cadre de construction (1) est relié à une fixation (13') du dispositif.

21. Procédé selon l'une quelconque des revendications 18 à 20, dans lequel, lors de l'étape b) la plate-forme (3) est retirée en même temps que l'objet fabriqué dessus et que le cadre de construction (1)

22. Procédé selon l'une- quelconque des revendications 18 à 21, dans lequel l'objet est fabriqué par couches.

23. Procédé selon l'une quelconque des revendications 18 à 22, moyennant quoi une maintenance du système du dispositif est effectuée automatiquement après le prélèvement de l'objet fabriqué.
